# EUROPÄISCHE PATENTSCHRIFT

(11) **EP 4 426 665 B1**
(45) Veröffentlichungstag und Bekanntmachung des Hinweises auf die Patenterteilung: **12.11.2025**
(21) Anmeldenummer: 23705202.2
(22) Anmeldetag: 26.01.2023
(51) Int. Cl.: C04B 38/00, B32B 18/00, C04B 35/52, C04B 35/524

(54) **VERFAHREN UND VORRICHTUNG ZUM HERSTELLEN VON CARBON-SCHAUM-PLATTEN**
METHOD AND DEVICE FOR PRODUCING CARBON FOAM PANELS
PROCÉDÉ ET DISPOSITIF POUR LA FABRICATION DE PANNEAUX EN MOUSSE DE CARBONE

(43) Veröffentlichungstag der Anmeldung: 11.09.2024
(73) Patentinhaber: Nippon Kornmeyer Carbon Group GmbH, 53578 Windhagen (DE)
(72) Erfinder: KLEIN, David, 53773 Hennef (Sieg) (DE); GERADS, Michael, 53119 Bonn (DE)
(74) Vertreter: Lippert Stachow Patentanwälte Rechtsanwälte Partnerschaft mbB
(86) Internationale Anmeldenummer: PCT/EP2023/051907
(87) Internationale Veröffentlichungsnummer: WO 2024/156353

(56) Entgegenhaltungen:
- EP-A1- 4 108 631
- CN-B- 104 310 373
- FU CHUNFANG ET AL: "From starch to carbonaceous foam: The effects of structure and conformation of the feedstock", JOURNAL OF ANALYTICAL AND APPLIED PYROLYSIS, vol. 149, 1 August 2020 (2020-08-01), NL, pages 104858, XP093072594, ISSN: 0165-2370, DOI: 10.1016/j.jaap.2020.104858

## Beschreibung

Die Erfindung betrifft ein Verfahren zum Herstellen von Carbon-Schaum-Platten aus Stärkepulver zur Verwendung als Dämmmaterial, Filter oder Baustoff.

Stärkepulver besteht ganz allgemein aus unterschiedlichen Polymeren und Proteinen, bzw. Polymermischungen wie Maisstärke oder anderen Polymeren auf pflanzlicher Basis. Hierzu kann auch ein Stärkepulver, gewonnen aus einem Hafer- bzw. Getreideprodukt gehören. Stärke ist als Polysaccharid ein natürliches Biopolymer.

Es ist bekannt, dass Polymere enthaltende Stärke unter gewissen Voraussetzungen aufgeschäumt werden kann, wenn diese auf eine höhere Temperatur aufgeheizt wird, wobei die Größe der entstehenden Blasen von der konkreten Temperatur abhängt. Bei diesem Vorgang schmilzt ein Teil der Polymere und gleichzeitig zersetzt sich ein weiterer Teil dieses oder eines anderen Polymers und bildet ein Gas, welches im geschmolzenen Polymer sozusagen gefangen ist und den gewünschten Schaum als Zwischenprodukt bildet. Dieser Schaum hat eine braune Farbe und besitzt eine weiche Konsistenz.

EP 4 108 631 A1 offenbart ein Verfahren zur Herstellung von Kohlenstoff- oder Graphitschaumteilen mit hohem Reinheitsgrad für Hochtemperatur-Isolierungen unter Vakuum oder Schutzgas, als Dämmmaterial oder als Filtermaterial.

Wenn jedoch eine zu hohe Temperatur oder ungeeignete Umgebungsbedingungen gewählt werden, zersetzt sich die Stärke insgesamt und es bildet sich kein Schaum, wobei bestenfalls verkohlte Reststücke entstehen.

Der Erfindung liegt die Aufgabe zugrunde, ein Verfahren und eine Vorrichtung zum Herstellen von feinporösen Carbon-Schaum-Platten mit hauptsächlich homogener Struktur zu schaffen, mit dem ein gleichmäßiges Aufschäumen von aufschäumbarem Stärkepulver gewährleistetet wird, das ohne zusätzlichen Wasserdampf auskommt und das sicher funktioniert.

Der Begriff "dünne Schicht" soll nachfolgend als ein Belag verstanden werden, welcher eine Oberfläche einer Unterlage im Wesentlichen als geschlossene Schicht vollständig und gleichmäßig abdeckt und bei der die einzelnen Partikel des Stärkepulvers hauptsächlich nebeneinanderliegen.

Die der Erfindung zugrundeliegende Aufgabe wird gelöst durch die Gegenstände der unabhängigen Ansprüche, beispielsweise durch
- Aufstreuen von mindestens einer möglichst dünnen Schicht von aufschäumbaren Stärkepulver auf eine temperaturfeste plattenförmige Unterlage,
- Einbringen der mit Stärkepulver beschichteten Unterlage in einen Ofen,
- Einleiten von Argon oder Stickstoff in den Ofen unter Verdrängung von Luft, oder durch Abpumpen von Luft aus dem Hochtemperatur-Ofen, bis sich ein Innendruck von ∼700 bis ^{∼}1.000 mbar eingestellt hat,
- Aufheizen des Ofens auf eine Aufschäumtemperatur von 180 °C bis maximal 450 °C zum Aufschäumen des Stärkepulvers auf der Unterlage,
- Halten der Aufschäumtemperatur in dem Ofen über einen längeren Zeitraum bis zu 10 Stunden, um die aufgeschäumte Stärke zu einer Schaumplatte zu stabilisieren,
- Carbonisieren der stabilisierten Schaumplatte bei > 1.000 °C in einem geeigneten Ofen unter Luftausschluss in einer Argon- oder Stickstoffatmosphäre.

Die in dem Ofen carbonisierte Schaumplatte kann anschließend im gleichen Ofen bei einer Temperatur > 2.000 °C unter Schutzgas oder im Vakuum Graphitiert werden, wobei der Ofen ein Vakuum-Hochtemperatur-Ofen sein kann.

Als aufschäumbare Stärke kann bevorzugt pulverförmige Maisstärke verwendet werden, weil diese besonders gut und gleichmäßig aufgeschäumt werden kann. Alternativ kann auch ein anderes Polymer oder eine Polymermischung in Pulverform, wie Tapiokastärke, Weizenstärke o. dgl. zum Aufschäumen verwendet werden.

Das Aufheizen auf die Aufschäumtemperatur erfolgt bevorzugt mit einer Heizrampe von ^{∼}5°C/min.

Die plattenförmige Unterlage kann aus einem graphitierbaren Material bestehen, das während der Carbonisierung und ggf. Graphitierung mit der Schaumplatte in gleichem Maße schrumpft.

Alternativ kann die plattenförmige Unterlage auch aus Stahl, Graphit bzw. einem anderen temperaturfesten Material bestehen, wobei die stabilisierte Schaumplatte vor der Carbonisierung von der plattenförmigen Unterlage gelöst werden muss.

Das aufschäumbare Stärkepulver wird vor oder während des Aufstreuens auf eine plattenförmige Unterlage gesiebt, um zu gewährleisten, dass die aufgestreute Schicht eine gleichmäßige Körnung aufweist.

Um dickere Schaumplatten herzustellen, wird nach jedem Aufschäumen oder Stabilisieren eine weitere möglichst dünne Schicht von Stärkepulver auf die bereits vorhandene dünnere aufgeschäumte Schicht aufgestreut und das Aufschäumen wiederholt.

Grundsätzlich besteht auch die Möglichkeit, die Aufschäumtemperatur geringfügig abzusenken, dafür aber das Aufschäumen der Stärke über einen längeren Zeitraum zu ermöglichen, so dass eine dünnere aber festere Schaumschicht entstehen kann.

Soll das Aufschäumen unter Luft erfolgen, so sollte die Aufschäumtemperatur maximal 250 °C betragen.

Eine strukturierte Oberfläche der Schaumplatte lässt sich dadurch erreichen, wenn das Stärkepulver mit örtlich unterschiedlicher Schichtdicke auf der plattenförmigen Unterlage, oder eine bereits aufgeschäumte Schaumplatte aufgetragen wird.

Bei dickeren aufgetragenen Schichten von Stärkepulver ist es sinnvoll und notwendig, die Aufschäumtemperatur um etwa 10% zu reduzieren, dafür muss aber die Zeit in der die Aufschäumtemperatur konstant gehalten werden muss, verlängert werden, um das Ausdiffundieren der beim Aufschäumen entstehenden Gase aus der dickeren Schicht zu erleichtern und um ein gleichmäßiges Aufschäumen zu erreichen. Alternativ kann auch "frische" Stärke regelmäßig auf die aufgeschäumte Stärke aufgestreut werden.

Zum Schließen der Oberfläche kann das auf die plattenförmige Unterlage gestreute Stärkepulver mit einem pulvrigen Polymer abgedeckt werden.

Die temperaturfeste plattenförmige Unterlage kann aus einem graphitierbaren Material, wie einem Polymer, oder auch aus Stahl, Graphit oder einem Material bestehen, dass ausreichend, d.h. bis > 250 °C, temperaturfest ist. Im letzteren Fall muss die stabilisierte Schaumplatte vor dem Graphitieren von der plattenförmigen Unterlage entfernt werden.

Wird als plattenförmige Unterlage ein graphitierbares Material verwendet, so kann dieses zusammen mit der Schaumauflage graphitiert werden. Als graphitierbares Material eignet sich Papier.

Zusammengefasst umfasst das Verfahren zum Herstellen von Carbon-Schaumplatten folgende Schritte:
- Aufstreuen von Stärke auf eine Unterlage.
- Einbringen der beschichteten Unterlage in einen Ofen und Erhöhen der Temperatur auf eine Aufschäumtemperatur von 180 °C bis 450 °C.
   o Das Aufschäumen erfolgt an Luft oder unter Argon- oder Stickstoffatmosphäre.
   ∘ Das Aufschäumen erfolgt bei einem Innendruck im Ofen zwischen ^{∼}700 mbar bis ^{∼}1.000 mbar.
   ∘ Die Aufschäumtemperatur beeinflusst die Dichtigkeit der Schaumplatte, d.h. je dichter, desto fester, dafür aber weniger dämmend ist der Schaum.
- Wiederholung der Schritte, um eine dickere Schaumplatte herzustellen.

Die auf diese Weise hergestellte Schaumplatte hat eine bräunliche Farbe.

Die Vorrichtung zur Durchführung des Verfahrens besteht aus einem mit Argon oder Stickstoff gefüllten Raum oder einer Box, in der sich ein Ofen mit einer Heizzone zur Aufnahme der mit Stärkepulver beschichteten plattenförmigen Unterlage befindet.

Der Ofen kann beispielsweise ein Durchlaufofen sein, der mit einer Transporteinrichtung zum Transport der mit Stärkepulver beschichteten Unterlagen von einer Eingabeposition in die Heizzone und aus dieser heraus in eine Entnahmeposition, versehen ist, wobei sich die Eingabeposition und die Entnahmeposition auch räumlich an der gleichen Stelle oder nebeneinander befinden können.

Der Ofen sollte mit einer Temperatur von maximal ^{∼}450 °C und Unterdruck im Bereich von ^{∼}700 mbar und ^{∼}1.000 mbar arbeiten können.

Die Transporteinrichtung ist bevorzugt ein hochtemperaturfestes Rollband.

Weiterhin ist über der Eingabeposition ein mit einer Rüttelvorrichtung gekoppelter Behälter angeordnet, in dem sich das auf die Unterlage aufzustreuende Stärkepulver befindet.

Der Behälter ist weiterhin mit einer Siebvorrichtung ausgestattet um eine gleichmäßige Körnung des auf die Unterlage aufzustreuenden Stärkepulvers sicherzustellen.

In einer Alternative ist zum Herstellen von Carbon-Schaum-Platten aus Stärkepulver ein beheizbarer Vakuum-Hochtemperatur-Ofen vorgesehen, der mit einem evakuierbaren thermisch isolierten Gehäuse ausgestattet ist, das mit einem Gaseinlass für Inertgas versehen ist, der seitlich in das Gehäuse hineinragt, wobei der Gaseinlass gleichzeitig mit einer Zuführeinrichtung für Stärkepulver gekoppelt ist und wobei sich im Gehäuse unterhalb des Gaseinlasses eine Aufnahme zur schichtweisen Abscheidung von Stärkepulver befindet.

Das über die Zuführeinrichtung für Stärkepulver in den Gaseinlass zugeführte Stärkepulver wird durch die Gasströmung in das Gehäuse mitgerissen und auf der Aufnahme abgeschieden und wird durch Erhöhung der Temperatur auf die Aufschäumtemperatur bei gleichzeitiger Reduzierung des Druckes im Gehäuse aufgeschäumt. Danach kann eine weitere Schicht Stärkepulver abgeschieden und das Aufschäumen wiederholt werden, bis eine Sandwichstruktur mit der gewünschten Schichtdicke entstanden ist.

Um die Zufuhr an Stärkepulver genau dosieren zu können, besteht die Zuführeinrichtung aus einem Vorratsbehälter, der mit einem unter diesem befindlichen Winkelrohr verbunden ist, das in der Seitenwand des Gaseinlasses endet. Im Winkelrohr befindet sich weiterhin eine Förderschnecke als Dosierhilfe und Zuführvorrichtung für die auf der Aufnahme im Gehäuse abzulagernde Stärke.

Dazu wird die Gasströmung im Gaseinlass genutzt, welche das den Gaseinlass erreichende Stärkepulver mitnimmt und in Sinne von "Beschneien" auf der Aufnahme ablagert.

Nach Erreichen der gewünschten Schichtdicke der Sandwichstruktur wird der Gaseinlass gestoppt und der Vakuum-Hochtemperatur-Ofen auf 1.000 °C oder 2.000 °C zum Carbonisieren bzw. Graphitieren der Sandwichstruktur aufgeheizt.

Die Erfindung wird nachfolgend an einem Ausführungsbeispiel näher erläutert. In den zugehörigen Zeichnungen zeigen
Fig. 1: eine schematische Darstellung eines zur Durchführung des Verfahrens geeigneten Durchlaufofens; und
Fig. 2: eine schematische Darstellung eines zur Durchführung des Verfahrens sowie zum Carbonisieren und Graphitieren geeigneten Vakuum-Hochtemperatur-Ofens.

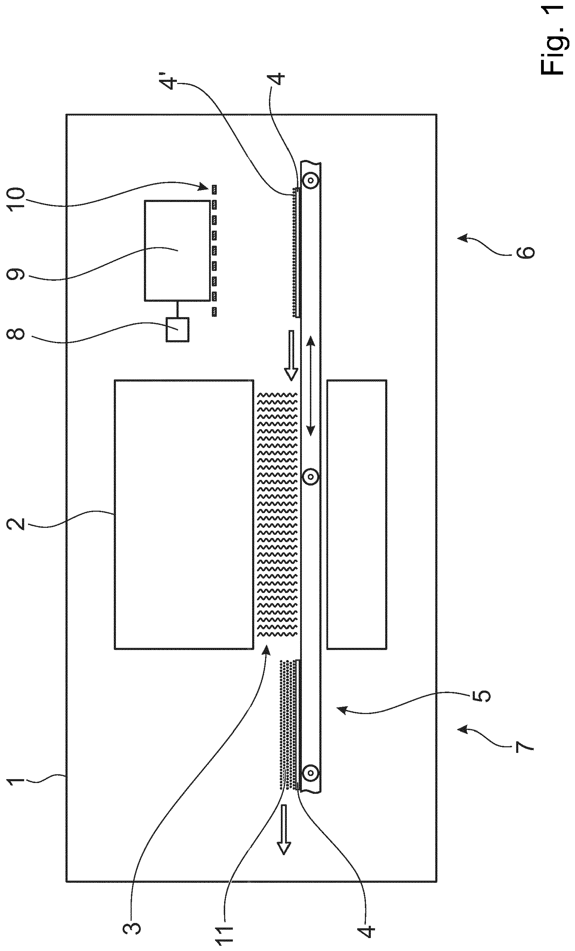

Die Vorrichtung zur Durchführung des Verfahrens besteht nach Fig. 1 aus einer mit Argon oder Stickstoff gefüllten Box 1, in der sich ein Ofen 2 mit einer Heizzone 3 zur Aufnahme von mit Stärkepulver 4' beschichteten plattenförmigen Unterlagen 4 befindet.

Der Ofen 2 kann ein mittels der Box 1 evakuierbarer Durchlaufofen sein, der mit einer Transporteinrichtung in Form eines temperaturfesten Rollbandes 5 o.dgl. zum Transport der mit Stärkepulver beschichteten plattenförmigen Unterlagen 4 von einer Eingabeposition 6 in die Heizzone 3 (Aufschäumzone) und aus dieser heraus in eine Entnahmeposition 7, versehen ist, wobei die Eingabeposition 6 und die Entnahmeposition 7 sich auch räumlich an der gleichen Stelle oder nebeneinander befinden können.

Weiterhin befindet sich über der Eingabeposition 6 ein mit einer Rüttelvorrichtung 8 gekoppelter Behälter 9 mit dem auf die plattenförmige Unterlage 4 aufzustreuenden Stärkepulver.

Der Behälter 9 ist weiterhin mit einer Siebvorrichtung 10 ausgestattet, um zu gewährleisten, dass nur Stärkepulver mit gleich großer Körnung auf die plattenförmige Unterlage 4 als Voraussetzung für ein gleichmäßiges Aufschäumen in der Heizzone 3 aufgestreut wird. Grundsätzlich kann anstelle von Stärkepulver auch Stärke in Granulatform, also mit etwas groberer Körnung als Pulver, verwendet werden.

Zusammengefasst sollte der Ofen 2 folgende Eigenschaften besitzen:
- In der Box 1 und damit auch im Ofen 2 muss mittels einer Absaugung ein Unterdruck erzeugbar sein, wobei der Ofen 2 offen bleibt.
- Der Ofen 2 in der Box 1 sollte mit unterschiedlichen Gasen arbeiten können, die von der Box 1 bereitgestellt werden.
- Die Box 1 sollte mit Argon, Stickstoff gefüllt und mit Luft füllbar/spülbar sein.
- Der Ofen 2 sollte eine Innentemperatur von 450 °C erreichen können.
- Die Box 1/der Ofen 2 sollte mit einem Abgassystem ausgestattet sein, um eine Flammenbildung der im Ofen gebildeten Gase an Luft zu verhindern.

Für die Herstellung von feinporigen Carbon-Schaumplatten 11 wird in einem ersten Schritt mindestens eine dünne Schicht von aufschäumbarem Stärkepulver auf eine temperaturfeste plattenförmige Unterlage 4 gestreut. Das erfolgt bevorzugt in der Eingabeposition 7 innerhalb der Box 1.

Anschließend wird die mit Stärkepulver beschichtete plattenförmige Unterlage 4 mit Hilfe des Rollbandes 5 in den Ofen 2 transportiert. Danach wird Luft, Argon oder Stickstoff in den Ofen 2 eingeleitet, bis sich ein Innendruck von 720 mbar Ofen durch Verdrängung von Luft, oder durch Abpumpen von Luft aus dem Hochtemperatur-Ofen eingestellt hat. Wesentlich ist hier, dass im Ofen 2 ein Innendruck vom ^{∼}720 mbar bis ^{∼}1.000 mbar einstellbar sein muss.

Wesentlich ist, dass der in der Box 1 befindliche Ofen 2 immer offen ist bzw. ohne Tür eingesetzt wird, so dass der erforderliche Innendruck im Ofen 2 durch die Box 1 eingestellt werden kann, wobei über die Box 1 auch die benötigten Gase in den Ofen 2 eingeleitet werden. Auf diese Weise entsteht für die Regelung von Gas und Druck kein Zeitverlust, was ein effizienteres Arbeiten ermöglicht.

Nun wird der Ofen 2 in der Heizzone 3 auf 180 °C - 450 °C (Aufschäumtemperatur) zum Aufschäumen der Stärke aufgeheizt. Wird anstelle Argon oder Stickstoff Luft in den Ofen 2 eingeleitet, darf die Aufschäumtemperatur von 250 °C nicht überschritten werden.

Ansonsten hängt die konkret zu wählende Aufschäumtemperatur vom Innendruck, der Gasart, dem aufzuschäumenden Polymer und dem Gasfluss in den Ofen ab. Steigt z.B. der Gasfluss an, muss die Aufschäumtemperatur wegen der höheren Kühlwirkung erhöht werden.

Um die auf der plattenförmigen Unterlage 4 aufgeschäumte Stärke zu einer Schaumplatte 11 zu stabilisieren, muss die Aufschäumtemperatur in der Heizzone 3 des Ofens 2 über einen längeren Zeitraum bis zu 10 Stunden gehalten werden.

Für die Herstellung von dickeren Schaumplatten 11 genügt es, die mit Stärkepulver beschichtete plattenförmige Unterlage 4 mit Hilfe des Rollbandes 5 zurück in die Eingabeposition 6 zu Aufbringen einer weiteren Schicht und dann wieder in den Ofen 2 zu transportieren. Dieser Vorgang kann einfach wiederholt werden, bis die gewünschte Dicke der Schaumplatte 11 erreicht ist, wobei die Temperatur im Ofen konstant bleibt.

Die durch das Stabilisieren handhabbare Schaumplatte 11 wird schließlich in einem anderen Ofen bei > 1.000 °C im Vakuum oder Schutzgas carbonisiert, oder bei > 2.000 °C graphitiert. Ein solcher Ofen kann ein Vakuum-Hochtemperatur-Ofen sein.

Wenn die plattenförmige Unterlage 4 aus einem graphitierbaren Material, wie einem Polymer, z.B. Polyacrylnitril, besteht, kann diese während der Carbonisierung und ggf. Graphitierung mit der Schaumplatte 11 verbunden bleiben. In einfachsten Fall kann die plattenförmige Unterlage aus Papier bestehen. Wenn die Unterlage aus Polyacrylnitril besteht, kann diese stabilisiert werden.

Alternativ kann die plattenförmige Unterlage 4 auch aus Graphit, oder mit Papier bedecktem Graphit bzw. einem anderen temperaturfesten Material bestehen, so dass die stabilisierte Schaumplatte 11 vor der Carbonisierung von der plattenförmigen Unterlage 4 gelöst werden kann, da die plattenförmige Unterlage 4 in diesem Fall nicht an der stabilisierten Schaumplatte 11 anhaftet.

Die carbonisierte Schaumplatte 11 kann auch bei einer Temperatur > 2.000 °C in einem geeigneten Ofen, z.B. einem separaten Vakuum-Hochtemperatur-Ofen, graphitiert werden.

Wenn dickere Schaumplatten 11 hergestellt werden sollen, wird nach jedem Aufschäumen eine weitere Schicht von aufschäumbarerem Stärkepulver auf die bereits vorhandene dünnere Schaumplatte aufgestreut und das Aufschäumen wiederholt, bis eine Sandwichstruktur entstanden ist.

Das Carbonisieren bzw. Graphitieren kann in diesem Fall allerdings erst dann durchgeführt werden, wenn sämtliche Schichten der Sandwichstruktur fertig aufgeschäumt sind.

Eine strukturierte Oberfläche der Schaumplatte 11 lässt sich dadurch erreichen, wenn das Stärkepulver mit örtlich unterschiedlicher Schichtdicke auf der plattenförmigen Unterlage 4 aufgetragen wird.

Bei dickeren aufgetragenen Schichten ist es sinnvoll und notwendig, die Aufschäumtemperatur um bis zu 10% zu reduzieren, um das Ausdiffundieren der beim Aufschäumen entstehenden Gase zu erleichtern und um ein gleichmäßiges Aufschäumen zu erreichen und das Entstehen von großen Blasen zu verhindern. Dazu muss aber die Zeit in der die Aufschäumtemperatur konstant gehalten wird, entsprechend verlängert werden. Alternativ kann auch "frische" Stärke regelmäßig auf die aufgeschäumte Stärke aufgestreut werden.

Grundsätzlich ist es auch möglich, den gesamten Prozess "Aufschäumen", "Carbonisieren/Graphitieren" in dem gleichen Ofen durchzuführen, der dann ein geschlossener Vakuum-Hochtemperatur-Ofen sein muss, in dem die für den jeweiligen Verfahrensschritt erforderlichen Temperaturen eingestellt werden können.

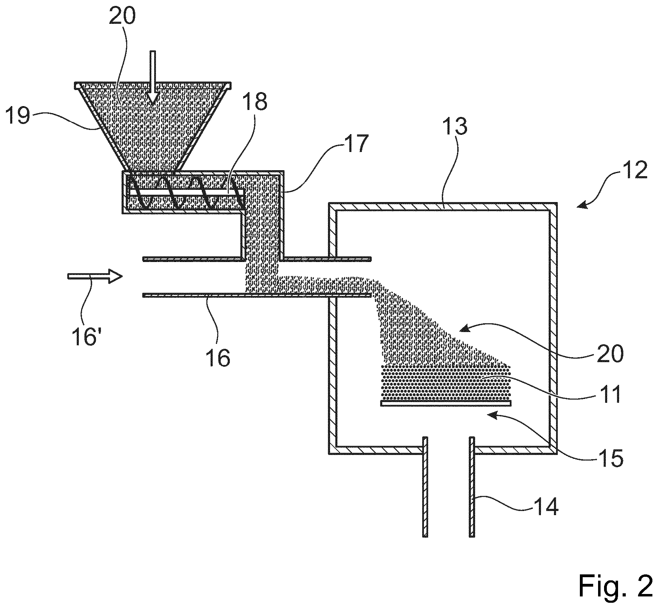

Fig. 2 zeigt eine schematische Darstellung eines zur Durchführung des Verfahrens zum Herstellen von Carbon-Schaum-Platten 11 aus Stärkepulver sowie zum Carbonisieren und Graphitieren geeigneten Vakuum-Hochtemperatur-Ofens 12.

Der Vakuum-Hochtemperatur-Ofen 12 besteht aus einem vakuumdichten Gehäuse 13, das über einen Anschlussstutzen 14 mit einer nicht dargestellten Pumpe zur Erzeugung eines Unterdrucks verbunden ist. Im Vakuum-Hochtemperatur-Ofen 12 befindet sich weiterhin eine Aufnahme 15 zur Aufnahme der plattenförmigen Unterlage 4, für die darauf aufzubauende Schaumplatte 11, z.B. in Form einer Sandwich-Struktur, befindet.

Weiterhin ist im oberen Bereich seitlich im Vakuum-Hochtemperatur-Ofen 12 ein Gaseinlass 16 vorgesehen, der in einem Abstand über dem Rand der Aufnahme 15 in den Vakuum-Hochtemperatur-Ofen 12 hineinragt.

Dieser Gaseinlass 16 ist einerseits mit einer nicht dargestellten Quelle für Inertgas 16' und über ein Winkelrohr 17 mit einer Förderschnecke 18 und einem darüber befindlichen Vorratsbehälter 19 für Stärke 20 verbunden.

Die Zuführung der pulverförmigen Stärke 20 in den Hochtemperatur-Vakuum-Ofen 12 erfolgt mit Hilfe des über das Gaseinlass 16 in den Vakuum-Hochtemperatur-Ofen 12 einströmende Inertgas, welches die mit der Förderschnecke 18 aus dem Vorratsbehälter 18 in das Winkelrohr 17 geförderte Stärke 20 infolge des Gasstromes durch den Gaseinlass 16 mitnimmt und auf der auf der Aufnahme 15 befindlichen plattenförmigen Unterlage 4 ähnlich wie beim Beschneien von Unterlagen abscheidet bei Erreichen der Aufschäumtemperatur aufschäumt.

Auf diese Weise lassen sich dicke Schaumplatten 11 herstellen. Alternativ kann die Temperatur auch abwechselnd hoch und heruntergefahren werden, um Schichten mit mehr oder weniger Dichte zu erhalten.

Auch lassen sich Sandwichstrukturen erzeugen, indem zunächst eine Schicht Stärke 20 abgeschieden wird und diese nachfolgend aufgeschäumt wird und anschließend wird eine weitere Schicht Stärke 20 abgeschieden und aufgeschäumt usw.

Wenn die gewünschte Schichtstärke der Schaumplatte 11 erreicht ist, kann die Gaszufuhr gestoppt und der Vakuum-Hochtemperatur-Ofen auf 1.000 °C bzw. 2.000 °C zum Carbonisieren bzw. Graphitieren hochgeheizt werden.

### Bezugszeichenliste

- 1: Box
- 2: Ofen
- 3: Heizzone
- 4: plattenförmige Unterlage
- 4': Stärkepulver
- 5: Rollband/Transporteinrichtung
- 6: Eingabeposition
- 7: Entnahmeposition
- 8: Rüttelvorrichtung
- 9: Behälter
- 10: Siebvorrichtung
- 11: Schaumplatte
- 12: Vakuum-Hochtemperatur-Ofen
- 13: Gehäuse
- 14: Anschlussstutzen
- 15: Aufnahme
- 16: Gaseinlass
- 16': Inertgas
- 17: Winkelrohr
- 18: Förderschnecke
- 19: Vorratsbehälter
- 20: Stärke

## Patentansprüche

1. Verfahren zum Herstellen von Carbon-Schaum-Platten aus Stärkepulver, durch
- Aufstreuen von mindestens einer möglichst dünnen Schicht von aufschäumbarem Stärkepulver auf eine temperaturfeste plattenförmige Unterlage,
- Einbringen der mit Stärkepulver beschichteten Unterlage in einen Ofen,
- Einleiten von Argon oder Stickstoff in den Ofen unter Verdrängung von Luft, oder durch Abpumpen von Luft aus dem Ofen, bis sich ein Innendruck von ^{∼}720 mbar bis ^{∼}1.000 mbar eingestellt hat,
- Aufheizen des Ofens auf Aufschäumtemperatur von 180 °C bis maximal 450 °C zum Aufschäumen des Stärkepulvers auf der Unterlage, und
- Halten der Aufschäumtemperatur über einen längeren Zeitraum bis zu 10 Stunden, um die aufgeschäumte Stärke zu einer Schaumplatte (11) zu stabilisieren.

2. Verfahren nach Anspruch 1, **dadurch gekennzeichnet, dass** die durch das Stabilisieren handhabbare Schaumplatte (11) bei > 1.000 °C im Vakuum oder Schutzgas carbonisiert, oder bei > 2.000 °C graphitiert wird.

3. Verfahren nach Anspruch 1, **dadurch gekennzeichnet, dass** als aufschäumbares Stärkepulver Maisstärke, Tapiokastärke, Weizenstärke, oder auf der Basis von Hafer bzw. Getreide gewonnenem Stärkepulver verwendet wird.

4. Verfahren nach Anspruch 1, **dadurch gekennzeichnet, dass** das Aufheizen auf die Aufschäumtemperatur mit einer Heizrampe von ^{∼}5°C/min erfolgt.

5. Verfahren nach einem der Ansprüche 1 bis 4, **dadurch gekennzeichnet, dass** die plattenförmige Unterlage aus einem graphitierbaren Material besteht.

6. Verfahren nach Anspruch 5, **dadurch gekennzeichnet, dass** als graphitierbares Material ein Polymer, wie Polyacrylnitril, verwendet wird.

7. Verfahren nach einem der Ansprüche 1 bis 4, **dadurch gekennzeichnet, dass** die plattenförmige Unterlage aus Stahl, Graphit bzw. einem anderen temperaturfesten Material besteht.

8. Verfahren nach einem der Ansprüche 1 bis 7, **dadurch gekennzeichnet, dass** das aufschäumbare Stärkepulver vor oder während des Aufstreuens auf eine plattenförmige Unterlage gesiebt wird.

9. Verfahren nach einem der Ansprüche 1 bis 8, **dadurch gekennzeichnet, dass** nach jedem Aufschäumen des Stärkepulvers eine weitere möglichst dünne Schicht von aufschäumbarer Stärke auf die bereits vorhandene dünnere aufgeschäumte Schaumplatte aufgestreut und das Aufschäumen wiederholt wird.

10. Verfahren nach einem der Ansprüche 1 bis 9, **dadurch gekennzeichnet, dass** das Stärkepulver zur Ausbildung einer strukturierten Oberfläche der Schaumplatte (11) mit örtlich unterschiedlicher Schichtdicke auf der plattenförmigen Unterlage, oder auf eine bereits aufgeschäumte Schaumplatte aufgetragen wird.

11. Verfahren nach einem der Ansprüche 1 bis 10, **dadurch gekennzeichnet, dass** die Aufschäumtemperatur bei dickeren aufgetragenen Schichten aus Stärkepulver um etwa 10% reduziert wird.

12. Vorrichtung zur Durchführung des Verfahrens zum Herstellen von Carbon-Schaum-Platten aus Stärkepulver oder anderen aufschäumbaren Polymeren/Polymermischungen in Pulverform, **dadurch gekennzeichnet, dass** ein Ofen (2) in einer mit Argon oder Stickstoff gefüllten Box (1) angeordnet ist, wobei der Ofen (2) mit einer Heizzone (3) zur Aufnahme von mit Stärke beschichteten plattenförmigen Unterlagen (4) ausgestattet ist, wobei der Ofen (2) ein Durchlaufofen ist, der mit einer Transporteinrichtung (5) zum Transport der mit Stärke beschichteten plattenförmigen Unterlagen (4) von einer Eingabeposition (6) in die Heizzone (3) und aus dieser heraus in eine Entnahmeposition (7), versehen ist, und wobei die Eingabeposition (6) und die Entnahmeposition (7) sich räumlich an der gleichen Stelle oder nebeneinander befinden können.

13. Vorrichtung nach Anspruch 12, **dadurch gekennzeichnet, dass** die Transporteinrichtung (5) ein hochtemperaturfestes Rollband ist.

14. Vorrichtung nach Anspruch 12 und 13, **dadurch gekennzeichnet, dass** über der Eingabeposition (6) ein mit einer Rüttelvorrichtung (8) gekoppelter Behälter (9) zur Aufnahme der Stärke angeordnet ist und der mit einer Siebvorrichtung (10) ausgestattet ist.

15. Vorrichtung zur Durchführung des Verfahrens zum Herstellen von Carbon-Schaum-Platten aus Stärkepulver oder anderen aufschäumbaren Polymeren/Polymermischungen in Pulverform, **dadurch gekennzeichnet, dass** ein beheizbarer Vakuum-Hochtemperatur-Ofen (12) mit einem evakuierbaren thermisch isolierten Gehäuse (13) ausgestattet ist, das mit einem Gaseinlass (16) für Inertgas versehen ist, der seitlich in das Gehäuse (13) hineinragt, wobei der Gaseinlass (16) gleichzeitig mit einer Zuführeinrichtung für Stärkepulver (20) gekoppelt ist und wobei sich im Gehäuse (13) unterhalb des Gaseinlasses (16) eine Aufnahme (15) zur schichtweisen Abscheidung von Stärkepulver (20) befindet.

16. Vorrichtung nach Anspruch 15, **dadurch gekennzeichnet, dass** die Zuführeinrichtung aus einem Vorratsbehälter (19) besteht, der mit einem unter diesem befindlichen Winkelrohr (17) verbunden ist, das in der Seitenwand des Gaseinlasses (16) endet und wobei sich im Winkelrohr (17) eine Förderschnecke (18) als Dosierhilfe für die auf der Aufnahme (15) im Gehäuse (13) abzulagernden Stärke (20) mittels der sich im Gaseinlass (16) ausbildenden Gasströmung des zugeführten Inertgases (16') oder Luft.

## Claims

1. A method for producing carbon foam panels from starch powder by
- sprinkling at least one very thin layer of foamable starch powder onto a temperature-resistant sheetlike substrate,
- introducing the starch-powder-coated substrate into a furnace,
- introducing argon or nitrogen into the furnace to displace air or by pumping out air from the furnace until an internal pressure of ≈720 to ≈1000 mbar has been established,
- heating the furnace to a foaming temperature of 180°C to not more than 450°C to foam the starch powder on the substrate, and
- maintaining the foaming temperature over a prolonged duration of up to 10 hours to stabilize the foamed starch into a foam panel (11).

2. The method as claimed in claim 1, **characterized in that** the foam panel (11) which is handleable due to the stabilizing is carbonized at >1000°C under vacuum or protective gas or graphitized at >2000°C.

3. The method as claimed in claim 1, **characterized in that** the foamable starch powder employed is corn starch, tapioca starch, wheat starch or starch powder obtained on the basis of oats/cereals.

4. The method as claimed in claim 1, **characterized in that** the heating to the foaming temperature is carried out with a heating ramp of ≈5°C/min.

5. The method as claimed in any of claims 1 to 4, **characterized in that** the sheetlike substrate is made of a graphitizable material.

6. The method as claimed in claim 5, **characterized in that** a polymer such as polyacrylonitrile is used as the graphitizable material.

7. The method as claimed in any of claims 1 to 4, **characterized in that** the sheetlike substrate is made of steel, graphite or another temperature-resistant material.

8. The method as claimed in any of claims 1 to 7, **characterized in that** the foamable starch powder is sieved before or during sprinkling onto a sheetlike substrate.

9. The method as claimed in any of claims 1 to 8, **characterized in that** after each foaming of the starch powder, a further very thin layer of foamable starch is sprinkled onto the already present relatively thin foamed foam panel and foaming is repeated.

10. The method as claimed in any of claims 1 to 9, **characterized in that**, to form a structured surface of the foam panel (11), the starch powder is applied to the sheetlike substrate or to a previously foamed foam panel in locally varying layer thicknesses.

11. The method as claimed in any of claims 1 to 10, **characterized in that**, in the case of thicker applied layers of starch powder, the foaming temperature is reduced by about 10%.

12. An apparatus for performing the method for producing carbon foam panels from starch powder or other foamable polymers/polymer mixtures in powder form, **characterized in that** a furnace (2) is arranged in an argon- or nitrogen-filled box (1), wherein the furnace (2) is provided with a heating zone (3) for receiving starch-coated sheetlike substrates (4), wherein the furnace (2) is a conveyor furnace provided with a transporting means (5) for transporting the starch-coated sheetlike substrates (4) from a feeding position (6) into the heating zone (3) and from said heating zone out into a discharging position (7), and wherein the feeding position (6) and the discharging position (7) may also be in the same place or next to one another in space.

13. The apparatus as claimed in claim 12, **characterized in that** the transporting means (5) is a high-temperature-resistant conveyor belt.

14. The apparatus as claimed in claims 12 and 13, **characterized in that** arranged above the feeding position (6) and coupled to a shaker apparatus (8) is a container (9) for receiving the starch which is provided with a sieving apparatus (10).

15. An apparatus for performing the method for producing carbon foam panels from starch powder or other foamable polymers/polymer mixtures in powder form, **characterized in that** a heatable vacuum high-temperature furnace (12) is provided with an evacuable thermally insulated housing (13) fitted with a gas inlet (16) for inert gas which projects laterally into the housing (13), wherein the gas inlet (16) is simultaneously coupled to a supplying means for starch powder (20) and wherein a receptacle (15) for layerwise deposition of starch powder (20) is arranged in the housing (13) below the gas inlet (16).

16. The apparatus as claimed in claim 15, **characterized in that** the supplying means is composed of a reservoir container (19) connected to an angled tube (17) arranged therebelow which terminates in the side wall of the gas inlet (16) and wherein the angled tube (17) has arranged in it a conveying screw (18) as a metering aid for the starch (20) to be deposited on the receptacle (15) in the housing (13) using the gas flow of the supplied inert gas (16') or air arising in the gas inlet (16).

## Revendications

1. Procédé pour la fabrication de panneaux en mousse de carbone à partir de poudre d'amidon, par
- saupoudrer au moins une couche très fine de poudre d'amidon expansible sur un substrat en forme de feuille résistant à la température,
- introduire le substrat recouvert de poudre d'amidon dans un four,
- introduire de l'argon ou de l'azote dans le four pour déplacer l'air ou en pompant l'air hors du four jusqu'à ce qu'une pression interne de ≈720 à ≈1000 mbar soit établie,
- chauffer le four à une température de moussage comprise entre 180 °C et 450 °C maximum afin de faire mousser la poudre d'amidon sur le substrat, et
- maintenir la température de moussage pendant une durée prolongée pouvant aller jusqu'à 10 heures afin de stabiliser l'amidon moussé en un panneau en mousse (11).

2. Procédé selon la revendication 1, **caractérisé en ce que** le panneau en mousse (11), qui est manipulable grâce à la stabilisation, est carbonisé à une température supérieure à 1000 °C sous vide ou sous gaz protecteur, ou graphité à une température supérieure à 2000 °C.

3. Procédé selon la revendication 1, **caractérisé en ce que** la poudre d'amidon expansible utilisée est de l'amidon de maïs, de l'amidon de tapioca, de l'amidon de blé ou de la poudre d'amidon obtenue à partir d'avoine/céréales.

4. Procédé selon la revendication 1, **caractérisé en ce que** le chauffage à la température de moussage est effectué avec une rampe de chauffage de ≈5 °C/min.

5. Procédé selon l'une des revendications 1 à 4, **caractérisé en ce que** le substrat en forme de feuille est constitué d'un matériau graphitisable.

6. Procédé selon la revendication 5, **caractérisé en ce qu'**un polymère tel que le polyacrylonitrile est utilisé comme matériau graphitisable.

7. Procédé selon l'une des revendications 1 à 4, **caractérisé en ce que** le substrat en forme de feuille est constitué d'acier, de graphite ou d'un autre matériau résistant à la température.

8. Procédé selon l'une des revendications 1 à 7, **caractérisé en ce que** la poudre d'amidon expansible est tamisée avant ou pendant son saupoudrage sur un substrat en forme de feuille.

9. Procédé selon l'une des revendications 1 à 8, **caractérisé en ce qu'**après chaque moussage de la poudre d'amidon, une autre couche très mince d'amidon moussable est saupoudrée sur le panneau en mousse déjà présent relativement mince et le moussage est répété.

10. Procédé selon l'une des revendications 1 à 9, **caractérisé en ce que**, pour former une surface structurée du panneau en mousse (11), la poudre d'amidon est appliquée sur le substrat en forme de feuille ou sur un panneau en mousse préalablement moussé en couches d'épaisseur variable localement.

11. Procédé selon l'une des revendications 1 à 10, **caractérisé en ce que**, dans le cas de couches plus épaisses de poudre d'amidon appliquées, la température de moussage est réduite d'environ 10 %.

12. Dispositif pour mettre en œuvre le procédé de fabrication de panneaux en mousse de carbone à partir de poudre d'amidon ou d'autres polymères/mélanges de polymères expansibles sous forme de poudre, **caractérisé en ce qu'**un four (2) est disposé dans une boîte (1) remplie d'argon ou d'azote, le four (2) étant muni d'une zone de chauffage (3) destinée à recevoir des substrats en forme de feuille (4) recouverts d'amidon, le four (2) est un four à convoyeur muni d'un moyen de transport (5) pour transporter les substrats en forme de feuilles (4) recouverts d'amidon depuis une position d'alimentation (6) dans la zone de chauffage (3) et depuis ladite zone de chauffage vers une position de déchargement (7), et dans lequel la position d'alimentation (6) et la position de déchargement (7) peuvent également se trouver au même endroit ou à proximité l'une de l'autre dans l'espace.

13. Dispositif selon la revendication 12, **caractérisé en ce que** le moyen de transport (5) est une bande transporteuse résistante aux hautes températures.

14. Dispositif selon les revendications 12 et 13, **caractérisé en ce qu'**un récipient (9) destiné à recevoir l'amidon, qui est muni d'un dispositif de tamisage (10), est disposé au-dessus de la position d'alimentation (6) et couplé à un dispositif d'agitation (8).

15. Dispositif pour mettre en œuvre le procédé de fabrication de panneaux en mousse de carbone à partir de poudre d'amidon ou d'autres polymères/mélanges de polymères expansibles sous forme de poudre, **caractérisé en ce qu'**un four à vide chauffant à haute température (12) est muni d'un boîtier isolé thermiquement (13) pouvant être mis sous vide, équipé d'une entrée de gaz (16) pour un gaz inerte qui fait saillie latéralement dans le boîtier (13) (13), dans lequel l'entrée de gaz (16) est simultanément couplée à un moyen d'alimentation en poudre d'amidon (20) et dans lequel un réceptacle (15) pour le dépôt par couches de la poudre d'amidon (20) est disposé dans le boîtier (13) sous l'entrée de gaz (16).

16. Dispositif selon la revendication 15, **caractérisé en ce que** le moyen d'alimentation est composé d'un réservoir (19) relié à un tube coudé (17) disposé en dessous de celui-ci, qui se termine dans la paroi latérale de l'entrée de gaz (16), et dans lequel le tube coudé (17) comporte une vis de transport (18) servant d'aide au dosage de la fécule (20) à déposer sur le réceptacle (15) dans le boîtier (13) en utilisant le flux de gaz du gaz inerte fourni (16') ou de l'air provenant de l'entrée de gaz (16).
